Europäisches Patentamt

European Patent Office

Office européen des brevets

(19)

(11) Numéro de publication: **0 270 414**
**B1**

(12)                    **FASCICULE DE BREVET EUROPEEN**

(45) Date de publication du fascicule du brevet:
28.03.90

(51) Int. Cl.⁴: **B64C 13/36**

(21) Numéro de dépôt: **87402489.6**

(22) Date de dépôt: **04.11.87**

(54) **Système pour la commande des volets hypersustentateurs d'un aéronef.**

(30) Priorité: **07.11.86 FR 8615588**

(43) Date de publication de la demande:
**08.06.88 Bulletin 88/23**

(45) Mention de la délivrance du brevet:
**28.03.90 Bulletin 90/13**

(84) Etats contractants désignés:
**DE ES GB NL SE**

(56) Documents cités:
**GB-A- 674 998**
**US-A- 2 563 219**
**US-A- 3 935 754**

(73) Titulaire: **AEROSPATIALE SOCIETE NATIONALE INDUSTRIELLE Société Anonyme dite:, 37, Boulevard de Montmorency, F-75016 Paris(FR)**

(72) Inventeur: **Bellego, Roger, 3 Place Corps Franc Pommies, F-31700 Blagnac(FR)**
Inventeur: **Foch, Etienne, 15bis rue Laganne, F-31300 Toulouse(FR)**

(74) Mandataire: **Bonnetat, Christian et al, CABINET BONNETAT 23, Rue de Léningrad, F-75008 Paris(FR)**

## Description

La présente invention concerne un système pour la commande des volets hypersustentateurs d'un aéronef.

On sait que, pour augmenter la portance d'un avion lors de certaines phases de vol exigeant une grande portance (telles que décollage, approche de piste, atterrissage), il est courant de prévoir, notamment dans le bord de fuite des ailes de cet avion, des volets hypersustentateurs susceptibles d'occuper, soit une position rétractée ou neutre, soit une position déployée, de préférence réglable, d'hypersustentation.

Souvent, la portance supplémentaire apportée par ces volets hypersustentateurs est encore augmentée du fait que ceux-ci reçoivent le souffle d'un ou de plusieurs moteurs.

Toutefois, ce dernier point présente un grave inconvénient. En effet, si l'un des moteurs de l'avion tombe en panne lorsque lesdits volets hypersustentateurs sont déployés, il en résulte aussitôt un déséquilibre de portance entre les deux côtés dudit avion, pouvant entraîner une assiette latérale excessive. Ceci est d'autant plus grave que l'avion est alors dans une phase de vol proche du sol.

Les systèmes les plus répandus pour la commande de volets hypersustentateurs comportent un moteur (électrique ou hydraulique) central, une transmission d'effort par arbre de torsion, des vérins à vis et des dispositifs mécaniques d'irréversiblité. Ils ne permettent pas, sauf complications très importantes, de prévoir des mesures susceptibles de rééquilibrer un avion déséquilibré à la suite de la panne d'un moteur devant souffler un ou plusieurs volets hypersustentateurs déployés.

La présente invention a pour objet de remédier à ces inconvénients. Elle concerne un système simple pour la commande des volets hypersustentateurs d'un aéronef, d'une part, capable d'introduire de façon automatique des corrections dissymétriques de portance tendant à rééquilibrer ledit aéronef en cas de panne d'un moteur de l'avion pendant une phase de vol dans laquelle lesdits volets hypersustentateurs sont déployés et, d'autre part, comportant des protections vis-à-vis de ses propres pannes.

A cette fin, selon l'invention, le système pour la commande des volets hypersustentateurs d'un aéronef comportant deux ailes fixes, symétriques l'une de l'autre par rapport au plan horizontal médian dudit aéronef et pourvues chacune d'au moins un moteur de propulsion et d'un volet hypersustentateur, chacun desdits volets étant soumis au souffle d'au moins un moteur, ledit système de commande comportant :
- une source de fluide hydraulique sous pression ;
- un bloc de distribution de fluide hydraulique relié à ladite source ;
- des moyens d'actionnement desdits volets hypersustentateurs commandés par ledit bloc de distribution de fluide hydraulique ;
- un dispositif de commande dudit bloc de distribution de fluide hydraulique ;
- un organe de commande volontaire, à la disposition d'un pilote et commandant, par l'intermédiaire dudit dispositif de commande, dudit bloc de distribution de fluide hydraulique et desdits moyens d'actionnement, lesdits volets hypersustentateurs entre une position neutre rétractée et au moins une position déployée d'hypersustentation et vice-versa ;
est caractérisé :
- en ce que lesdits moyens d'actionnement sont des vérins hydrauliques réversibles, agencés de façon que chaque volet soit actionné par un vérin et que chacune des deux chambres d'un vérin soit reliée à la chambre correspondante de l'autre vérin, ainsi qu'à un orifice dudit bloc de distribution de fluide hydraulique, de façon que l'alimentation et l'échappement des chambres correspondantes desdits vérins soient respectivement simultanés ;
- en ce que lesdits volets hypersustentateurs sont liés par une liaison mécanique de torsion permettant une dissymétrie de position desdits volets hypersustentateurs en position déployée ; et
- en ce que des moyens sont prévus pour bloquer lesdits volets hypersustentateurs en position, dès que la dissymétrie de position desdits volets hypersustentateurs en position déployée atteint un seuil prédéterminé.

Ainsi, grâce à la liaison fluide existant entre lesdits vérins, une dissymétrie de portance (c'est-à-dire de sortie) desdits volets peut se produire, le volet le moins chargé (c'est-à-dire disposé du côté du moteur en panne) ayant tendance à rentrer, tandis que le volet disposé du côté du (ou des) moteur (s) en fonctionnement a tendance à sortir. Cette dissymétrie est permise par ladite liaison mécanique de torsion. Toutefois, dès que cette dissymétrie risquerait de devenir excessive, (c'est-à-dire dès que la torsion de ladite liaison mécanique atteint ledit seuil) au point de présenter un danger pour la stabilité de l'avion, lesdits moyens de blocage limitent la dissymétrie à une valeur acceptable.

Selon un mode de réalisation avantageux de l'invention, lesdits moyens de blocage comportent un interrupteur commandé par la torsion de ladite liaison mécanique et commandant ledit dispositif de commande dudit bloc de distribution hydraulique. Toutefois, selon une variante, lesdits moyens de blocage comportent des capteurs de position desdits volets hypersustentateurs, un comparateur à seuil et un interrupteur commandé par ledit comparateur à seuil et commandant ledit dispositif de commande dudit bloc de distribution de fluide hydraulique.

Avantageusement, ladite liaison mécanique comporte un arbre de torsion qui tourillonne autour de son axe par rapport à la structure desdites ailes et dont les extrémités sont respectivement reliées auxdits volets par l'intermédiaire de manetons et de bielles. Dans ce cas, il est avantageux que ledit arbre de torsion soit relié audit dispositif de commande dudit bloc de distribution de fluide hydraulique, afin de transmettre audit dispositif de commande des informations sur sa rotation autour de son axe, c'est-à-dire des informations sur l'amplitude de la position déployée desdits volets.

Lorsque la liaison mécanique est un arbre de torsion et que les moyens de blocage comportent un in- terrrupteur commandé par la torsion dudit arbre, il est avantageux que ladite liaison mécanique comporte de plus une tige coaxiale audit arbre de torsion et solidaire en rotation, à l'une de ses extrémités, d'une extrémité dudit arbre de torsion, un système de butée et de contact étant disposé entre l'extrémité libre de ladite tige et la partie en regard dudit arbre de torsion.

Dans le cas où, sur chaque aile de l'avion, est prévu un volet hypersustentateur supplémentaire extérieur, les deux volets d'une aile étant liés l'un à l'autre par un couplage mécanique, il est avantageux :
- que lesdits volets supplémentaires extérieurs soient respectivement actionnés par des vérins hydrauliques réversibles supplémentaires, agencés de façon :
. que les chambres de ces vérins supplémentaires correspondant, lorsqu'elles sont alimentées en fluide, à la rétraction desdits volets extérieurs supplémentaires soient reliées en commun aux chambres correspondantes des vérins associés aux volets intérieurs et au premier orifice corres pondant dudit bloc de distribution de fluide hydraulique ;
. et que les chambres desdits vérins supplémentaires correspondant, lorsqu'elles sont alimentées en fluide, au déploiement desdits volets extérieurs supplémentaires soient reliées entre elles et, par l'intermédiaire d'un premier restricteur, au second orifice dudit bloc de distribution hydraulique, auquel sont reliées les chambres correspondantes des vérins actionnant les volets intérieurs ;
- et qu'un second restricteur soit prévu entre ledit second orifice dudit bloc de distribution hydraulique et les chambres correspondantes des vérins associés aux volets intérieurs.

Ainsi, on établit par l'intermédiaire des deux restricteurs, une liaison entre les circuits de déploiement des volets extérieurs et des volets intérieurs. Par suite, en cas de fuite dans l'un des circuits, il y a transfert de fluide d'un circuit à l'autre. La rétraction des volets est donc freinée et le pilote a le temps de prendre les mesures nécessaires pour éviter les risques dus à la perte de portance qui en résulte.

De préférence, le système selon l'invention comporte un dispositif d'alarme déclenché par ledit dispositif de commande, lorsque ledit organe de commande volontaire est dans une position correspondant au déploiement desdits volets hypersustentateurs, alors que la rotation dudit arbre de torsion indique la rétraction.

Les figures du dessin annexé feront bien comprendre comment l'invention peut être réalisée. Sur ces figures, des références identiques désignent des éléments semblables. De plus, lorsque des éléments identiques sont associés à des éléments particuliers, chacun desdits éléments identiques porte une référence commune à tous, affectée d'un indice constitué par la référence de l'élément particulier correspondant.

La figure 1 illustre en perspective schématique un avion susceptible d'être perfectionné conformément à l'invention.

La figure 2 montre, en vue de côté, d'une part le montage de chacun des volets hypersustentateurs de l'avion de la figure 1 sur l'aile correspondante et, d'autre part, la liaison entre les deux volets hypersustentateurs intérieurs des ailes dudit avion.

La figure 3 est le schéma synoptique d'un premier mode de réalisation de l'invention.

La figure 4 est une coupe longitudinale axiale du système de torsion assurant la liaison mécanique entre les deux volets hypersustentateurs intérieurs des deux ailes de l'avion de la figure 1.

La figure 5 est une coupe transversale selon la ligne V-V de la figure 4.

La figure 6 est une variante de réalisation de l'invention, en vue semblable à celle de la figure 3.

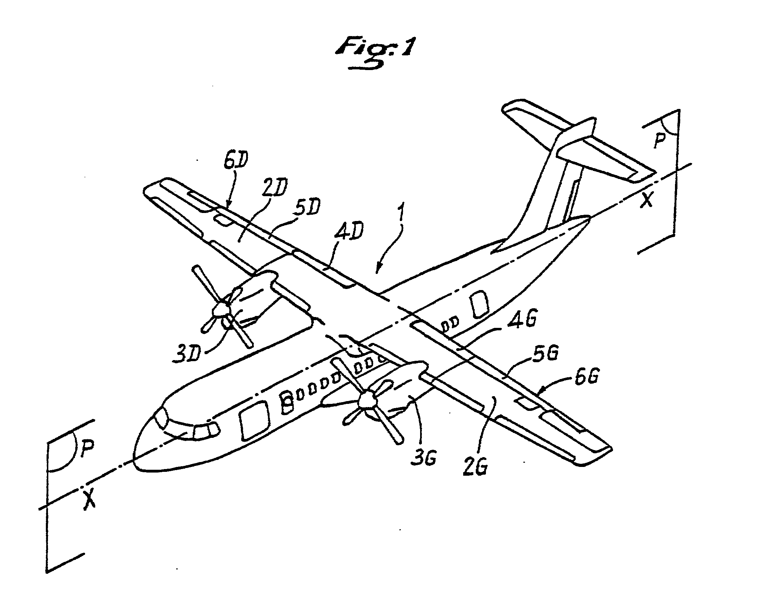

L'avion 1, montré schématiquement en perspective sur la figure 1, présente un plan longitudinal médian de symétrie P passant par son axe longitudinal X-X. Cet avion 1 comporte deux ailes fixes 2 identiques et symétriques l'une de l'autre par rapport audit plan longitudinal médian P. Chaque aile 2 est pourvue d'un moteur de propulsion 3 et de deux volets hypersustentateurs 4 et 5, agencés dans le bord de fuite 6. Suivant que les éléments 2 à 6 sont disposés du côté droit ou du côté gauche de l'avion 1, ils sont affectés des indices D ou G sur la figure 1.

Les moteurs 3 (qui sont représentés sous la forme de moteurs à hélice, mais qui pourraient également être des réacteurs) soufflent un jet d'air sur les volets 4 et 5 correspondants. Comme on peut le voir, chaque volet 4 est intérieur par rapport au volet 5 (extérieur) associé et, à cause de l'implantation particulière représentée pour les moteurs, reçoit un souffle plus important que le volet extérieur 5 associé. Bien entendu, si les moteurs 3 étaient plus écartés l'un de l'autre, la situation pourrait être inverse, les volets extérieurs 5 recevant alors des moteurs 3 un souffle plus important que les volets intérieurs 4.

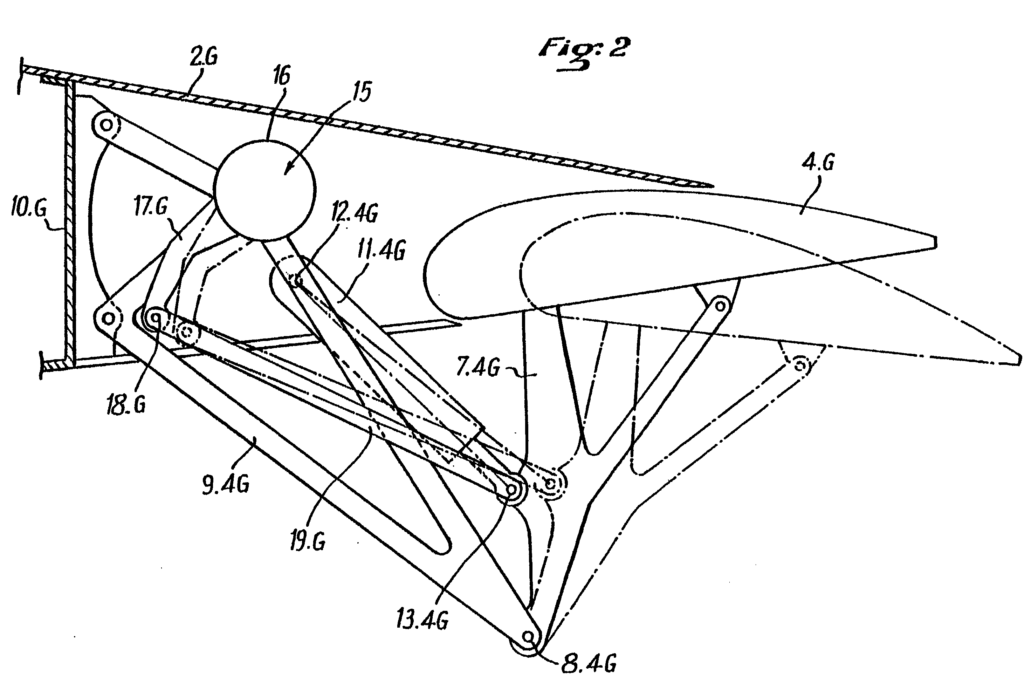

Sur la figure 2, on a représenté plus particulièrement le montage du volet hypersustentateur 4G sur l'aile 2G. Toutefois, ce montage particulier comporte de nombreux points communs avec ceux des autres volets 4 et 5 et permet de les illustrer.

Comme le montre la figure 2, chaque volet hypersustentateur 4 ou 5 est solidaire d'une monture 7, pouvant pivoter, d'une seule pièce avec le volet correspondant, autour d'un axe 8, disposé au-dessous de l'aile 2 correspondante. Pour ce faire, la monture pivotante 7 est articulée en 8, à une structure descendante 9, fixée rigidement à la poutre arrière 10 de ladite aile. Un vérin à double effet 11 est articulé, à ses extrémités, d'une part à la structure fixe 9 autour de l'axe 12, d'autre part à la monture pivotante 7, autour d'un axe 13.

Ainsi, lorsque le vérin 11 est totalement rétracté, le volet 4,5 correspondant est dans sa position rétractée (représentée en trait plein sur la figure 2) pour laquelle il constitue un prolongement aérodynamique de l'aile 2. En revanche, lorsque le vérin 11 est commandé à l'extension, il peut communiquer au volet 4,5 en position d'hypersustentation réglable, telle que celle représentée à titre d'exemple en pointillés sur la figure 2.

Puisque, comme cela a été mentionné ci-dessus, la figure 2 représente plus particulièrement le montage du volet hypersustentateur intérieur 4G, les références 2,4 et 10 sont affectées de l'indice G, alors que les références 7,8,9,11,12 et 13 sont affectées de l'indice 4G.

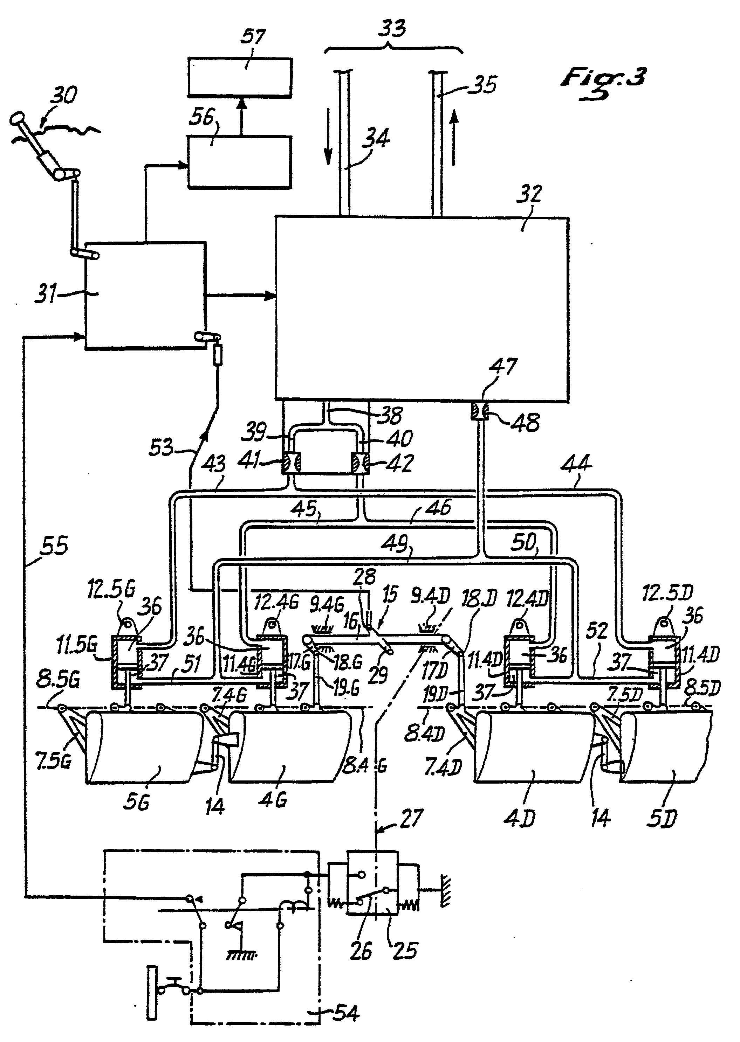

Par ailleurs, comme cela est montré sur les figures 3 et 6, des couplages mécaniques 14 sont prévus entre les volets intérieur (4G ou 4D) et extérieur (5G ou 5D) de chacun des deux couples de volets 4,5. Ces couplages mécaniques 14, destinés à rendre solidaires en rotation éventuellement avec un jeu prédéterminé les volets 4 et 5 de chaque couple, peuvent être de tout type connu, mais sont de préférence conformes à celui décrit dans la demande de brevet français n° 85 18515, déposée le 13 Décembre 1985 au nom de la Demanderesse pour "Système de couplage de deux volets d'une aile d'aéronef et aile d'aéronef équipée d'un tel système".

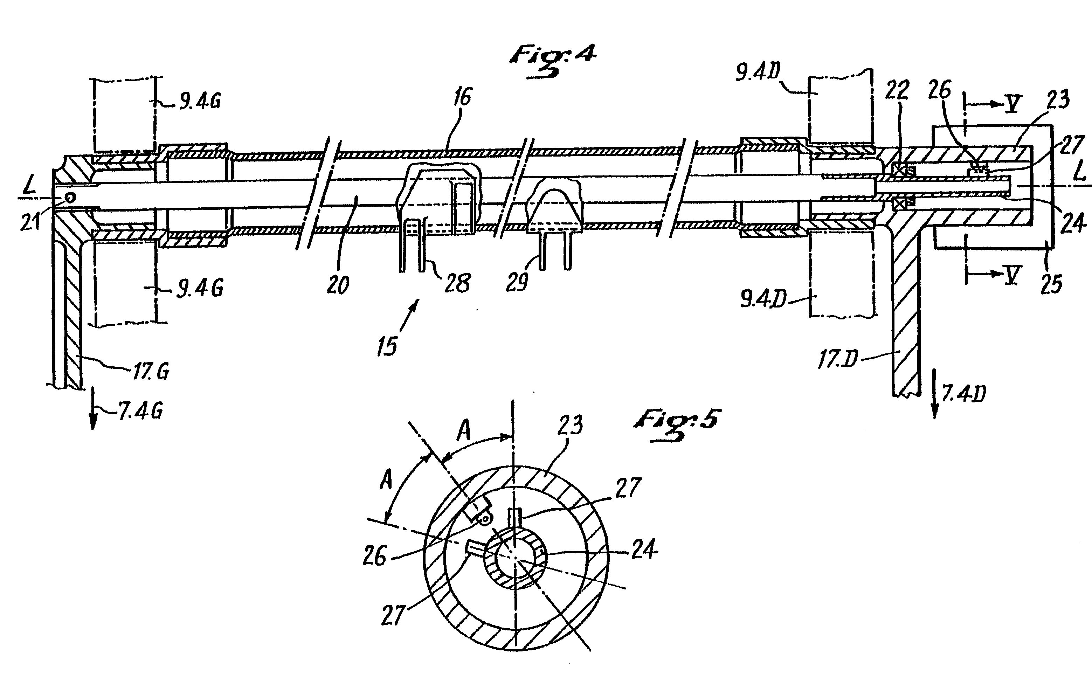

De plus, un système de torsion 15 établit une liaison mécanique entre le volet hypersustentateur intérieur 4G de l'aile gauche 2G et le volet hypersustentateur intérieur 4D de l'aile droite 2D. Dans le mode de réalisation du système 15, illustré sur les figures 2 à 5, on a supposé que les axes de pivotement 8.4 G et 8.4 D desdits volets étaient alignés et que ledit système de torsion 15 comportait un arbre ou tube de torsion 16 d'axe L-L parallèle auxdits axes de pivotement 8.4 G et 8.4 D.

A chacune de ses extrémités, le tube de torsion 16 est solidaire d'un maneton 17.G ou 17.D, lesdits manetons étant parallèles. Le maneton gauche 17.G est articulé en 18.G à une bielle 19.G, elle-même articulée - par exemple en 13.4 G - sur la monture pivotante 7.4 G du volet hypersustentateur intérieur gauche 4.G (voir également la figure 2). De façon identique, le maneton droit 17.D est articulé en 18.D à une bielle 19.D, elle-même articulée - par exemple en 13.4D - sur la monture pivotante 7-4 D du volet hypersustentateur intérieur gauche 4.D.

Les liaisons des manetons 17.G et 17.D aux montures pivotantes 7.4 G et 7.4 D sont identiques, mais symétriques par rapport audit plan longitudinal médian P de l'avion 1.

Par ailleurs, comme cela est montré sur la figure 2, l'extrémité gauche du tube 16 est tourilloné autour de l'axe L-L dans la structure fixe 9.4G du volet 4G, tandis que l'extrémité droite dudit tube 16 est tourilloné de la même façon dans la structure fixe 9.4D du volet 4D.

A l'intérieur du tube de torsion 16, est prévue une tige coaxiale 20, solidaire à l'une de ses extrémités - par exemple l'extrémité gauche par l'intermédiaire d'une goupille 21 - du maneton correspondant (17G). A l'autre extrémité de la tige 20 - par exemple l'extrémité droite -, est prévu un roulement 22 rendant le tube de torsion 16 et ladite tige 20 indépendants l'un de l'autre en rotation autour de l'axe L-L.

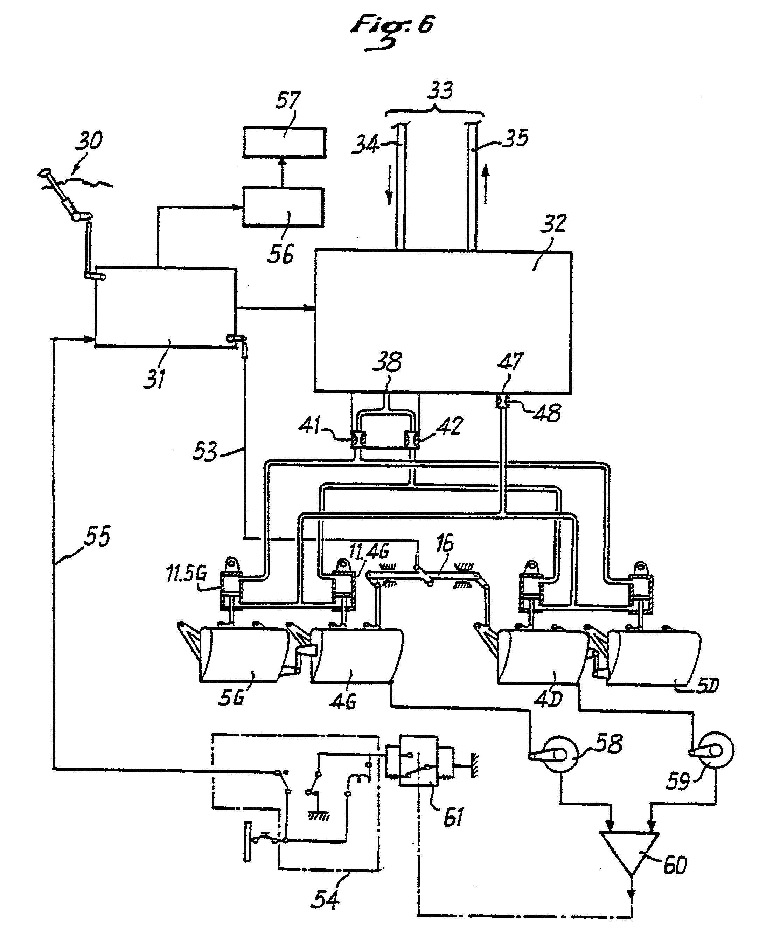

A cette dernière extrémité, le tube 16 et la tige 20 comportent respectivement des prolongements 23 et 24 coaxiaux à l'axe L-L et enfermés dans un boîtier de commutation 25. A l'intérieur du prolongement 23 du tube 16 est monté un microcontact 26, tandis que sur le prolongement 24 de la tige 20 sont prévues deux butées 27, d'actionnement dudit microcontact 26 (voir également la figure 5).

Comme on peut le voir, il existe un décalage angulaire A autour de l'axe L-L entre le microcontact 26 et chaque butée 27. Ainsi, le microcontact 26 n'est actionné que lorsque la torsion du tube 16 dépasse l'amplitude angulaire A.

Des pattes 28,29 sont prévues sur le tube de torsion 16 pour permettre la prise de détection mécanique de l'ampleur de la rotation dudit tube.

De façon connue, les volets 4 et 5 sont commandés, à partir d'un organe de commande volontaire 30 à la disposition d'un pilote et d'un dispositif de commande 31, par un bloc de distribution hydraulique 32 reliée à une source 33 de fluide hydraulique sous pression, par une ligne d'alimentation 34 et une ligne de retour 35.

Conformément à la présente invention, chacun des vérins 11.4G, 11.4D, 11.5G et 11.5D est du type à double effet comportant une chambre d'extension 36 et une chambre de rétraction 37 antagonistes, lesdites chambres 36 et 37 étant respectivement alimentées en fluide sous pression suivant que l'on désire déployer ou rétracter les volets associés auxdits vérins. De plus, l'alimentation desdites chambres est réalisée de la manière suivante :
- un orifice unique d'alimentation 38 du bloc hydraulique 32 est relié à deux conduits en dérivation 39 et 40, comportant chacun un restricteur 41 ou 42. Le restricteur 41 est relié, respectivement par deux canalisations 43 et 44 en dérivation, aux chambres d'extension 36 des deux vérins 11.5G et 11.5D associés respectivement aux volets extérieurs 5G et 5D. Le restricteur 42 est relié, respectivement par deux canalisations 45 et 46 en dérivation, aux chambres d'extension 36 des deux vérins 11.4G et 11.4D associés respectivement aux volets intérieurs 4G et 4D ;
- un orifice unique d'alimentation 47 du bloc hydraulique 32 est relié à un restricteur 48. Le restricteur 48 est relié, respectivement par deux canalisations 49 et 50 en dérivation, à des canalisations 51 et 52 reliant respectivement entre elles les chambres de rétraction 37 des vérins 11.4G et 11.5G associés aux volets gauches 4G et 5G et les chambres de rétraction 37 des vérins 11.4D et 11.5D associés aux volets droits 4D et 5D.

Lorsque l'organe 30 est dans sa position correspondant à la position neutre des volets 4G,4D,5G et 5D, les chambres de rétraction 37 des vérins 11.4G,11.4D,11.5G et 11.5D sont alimentées en fluide sous pression à partir de l'orifice 47, à travers le restricteur 48 et les canalisations 49,50,51 et 52. Simultanément, les chambres 36 desdits vérins sont à l'échappement par les canalisations 39,40,43,43, les restricteurs 41 et 42 et l'orifice 38.

Si un pilote actionne l'organe 30 et le place dans une position correspondant à une position déployée d'hypersustentation déterminée des volets 4G,4D,5G et 5D, le dispositif de commande 31 (transmettant l'ordre reçu de l'organe 30) et le bloc de distribution hydraulique 32 mettent les chambres 37 des vérins 11.4G, 11.4D, 11.5G et 11.5D à l'échappement et simultanément introduisent du fluide sous pression dans les chambres 36 desdits vérins. Par suite, les volet 4 et 5 se déploient simultanément, le synchronisme de déploiement étant de plus contrôlé par les liaisons mécaniques 14 et par le système de torsion 15. Pendant ce déploiement, le tube de torsion 16 tourne, sans torsion, autour de son axe L-L, par rapport aux structures 9.4G et 9.4D, puisqu'alors les montures 7 s'écartent desdites structures 9 et que le mouvement est transmis par les bielles 19.G et 19.D et les manetons 17.G et 17.D. Grâce à une liaison 53, provenant par exemple de la patte 28, le dispositif de commande 31 connaît à chaque instant la rotation réelle dudit tube de torsion 16 et donc l'ampleur correspondante du déploiement desdits volets 4 et 5. Dès que lesdits volets ont atteint la position de déploiement affichée par l'organe 30, le dispositif de commande 31 contrôle le bloc de distribution hydraulique 32 pour que l'alimentation en fluide des chambres 36 et l'échappement des chambres 37 soient arrêtés. Les volets 4 et 5 occupent alors la position déployée désirée et reçoivent le souffle des hélices des moteurs 3G et 3D.

Si, dans cette position déployée desdits volets, un moteur 3 tombe en panne, la réduction du souffle du côté du moteur en panne réduit le couple appliqué sur les volets 4 et 5 disposés en arrière, ce qui provoque automatiquement et instantanément un mouvement de sortie de ces derniers volets. Il en résulte, dans les canalisations 43,44 et 45,46 une aspiration de fluide vers les volets disposés du côté du moteur en panne et, dans les canalisations 49,50 un refoulement de fluide vers les volets disposés du côté opposé au moteur en panne. Ces derniers volets effectuent donc un mouvement de rentrée.

Grâce à cette sortie des volets disposés du côté du moteur en panne et à la rentrée automatique des volets opposés à ce moteur en panne, l'avion est soumis à un ordre spontané de roulis allant à l'encontre de l'effet de la panne du moteur.

Les positions des volets 4G et 5G, d'une part, et des volets 4D et 5D, d'autre part, n'étant plus identiques, le tube 16 est soumis à une torsion autour de son axe L-L, par suite des liaisons 17.G,19G et 17D,19D.

Tant que cette torsion est inférieure à l'angle A (par exemple égal à 9°), le microcontact 26 n'est pas actionné. En revanche, si la torsion du tube 16 atteint la valeur A, l'une des butées 27 actionne le microcontact 26. Celui-ci, par exemple par l'intermédiaire d'un relais 54, de préférence automaintenu, et de la liaison 55, coupe l'alimentation du dispositif de commande 31, de sorte que les volets 4 restent dans la position relative qu'ils avaient lorsque la valeur de la torsion du tube 16 avait atteint la valeur A.

Le tube de torsion 16, la tige 20, le microcontact 26 et les butées 27 constituent donc un système de sécurité assurant que la dissymétrie entre les volets de gauche et ceux de droite ne peut excéder un seuil correspondant à la valeur A. Grâce à cette disposition on évite notamment les effets d'une panne accidentelle (par exemple blocage d'un volet ou d'un vérin) simultanée à une manoeuvre de sortie ou de rentrée des volets, qui pourraient provoquer une dissymétrie dangereuse si l'ordre de sortie ou de rentrée des volets étaient maintenu.

Par ailleurs, le système selon l'invention permet de retarder les effets d'une fuite de fluide hydraulique tendant à faire rentrer les volets 4 et 5. Une telle fuite, si le pilote n'en était pas prévenu et n'avait pas le temps d'intervenir, pourrait avoir des conséquences graves entraînant le décrochage et la chute de l'avion.

Si une fuite de fluide hydraulique se produit dans la ligne 43-44 (ou dans la ligne 45-46), il en résulte, d'une part, une baisse de pression du fluide hydraulique dans cette ligne et d'autre part, une augmentation de pression dans l'autre ligne 45-46 (ou 43-44) du fait que les efforts aérodynamiques sont alors principalement supportés par les volets alimentés par la ligne restée saine. Puisque la ligne détériorée est en communication, par les restricteurs 41 et 42, avec la ligne saine, du fluide passe de cette ligne saine vers la ligne détériorée à travers lesdits restricteurs, à une vitesse permise par ceux-ci. Par suite, non seulement les volets reliés à la ligne détériorée, mais encore ceux reliés à la ligne saine rentrent simultanément vers leur position rétractée. De plus, cette rentrée s'effectue lentement et non pas de façon brutale.

Cette lente rentrée simultanée de l'ensemble des volets est suivie en rotation par le tube de torsion 16, qui tourne autour de son axe L-L. Grâce à la liaison 53, le dispositif de commande 31 est donc averti qui les volets sont en cours de rétraction, alors que la position du levier 30 indique alors que ces volets devraient être en position déployée. Il en résulte une anomalie qui déclenche un dispositif logique 56 actionnant une alarme 57.

Le pilote est alors averti de cette anomalie et, à cause de la lenteur de rentrée des volets, due aux restricteurs 41 et 42, il a le temps d'intervenir pour éviter le décrochage de l'avion.

Le restricteur 48, à l'orifice 47 du bloc de distribution hydraulique 32, a pour fontion de créer une perte de charge, dans les canalisations 49,50 de rentrée des vérins, suffisante pour éviter que, lors des fonctionnements au sol, le poids des volets ne crée une cavitation dans les chambres 36 desdits vérins, ce qui provoquerait des anomalies de fonctionnement.

Il va de soi que les restricteurs 41,42 et 48 pourraient être incorporés au bloc hydraulique 32. Celui-ci, qui accomplit des fonctions simples, peut être de tout type connu et n'est pas représenté en détail. Il est pourvu de clapets commandés dont la fonction est d'obturer, quand cela est nécessaire, les communications avec les canalisations des vérins.

A la patte 29 du tube de torsion 16 peut être reliée un indicateur (non représenté) permettant de symboliser pour le pilote la position actuelle des vérins 4 et 5.

Le système montré par la figure 6 est identique à celui de la figure 3, sauf en ce qui concerne les points suivants :
- le système de torsion 15 ne comporte que le tube de torsion 16 et ses manetons 17.G et 17.D ; la tige 20, la goupille 21, le roulement 22, les prolongements 23 et 24, le boîtier 25, le microcontact 26 et les butées 27 sont supprimés.
- en revanche, deux capteurs de position 58 et 59 sont respectivement associés aux volets 4G et 4D et fournissent leurs mesures à un comparateur à seuil 60. C'est ce comparateur à seuil 60 qui actionne le relais 54, par l'intermédiaire d'un contact 61 (faisant office du microcontact 25).

## Revendications

1 - Système pour la commande des volets hypersustentateurs (4G, 4D) d'un aéronef comportant deux ailes fixes, symétriques l'une de l'autre par rapport au plan longitudinal médian dudit aéronef et pourvues chacune d'au moins un moteur de propulsion et d'un volet hypersustentateur, chacun desdits volets (4G, D) étant soumis au souffle d'au moins un moteur, ledit système de commande comportant :
- une source (33) de fluide hydraulique sous pression ;
- un bloc (32) de distribution de fluide hydraulique relié à ladite source ;
- des moyens (11.4G,11.4D) d'actionnement desdits volets hypersustentateurs (4G, 4D) commandés par ledit bloc (32) de distribution de fluide hydraulique ;
- un dispositif (31) de commande dudit bloc de distribution de fluide hydraulique ; et
- un organe (30) de commande volontaire, à la disposition d'un pilote et commandant, par l'intermédiaire dudit dispositif de commande (31), dudit bloc (32) de distribution de fluide hydraulique et desdits moyens d'actionnement (11.4G,11.4D), lesdits volets hypersustentateurs entre une position neutre rétractée et au moins une position déployée d'hypersustentation et vice-versa, caractérisé :
- en ce que lesdits moyens d'actionnement sont des vérins hydrauliques réversibles (11.4G et 11.4D), agencés de façon que chaque volet soit actionné par un vérin et que chacune des deux chambres (36,37) d'un vérin soit reliée à la chambre correspondante de l'autre vérin, ainsi qu'à un orifice (38 ou 47) dudit bloc (32) de distribution de fluide hydraulique, de façon que l'alimentation et l'échappement des chambres correspondantes desdits vérins soient respectivement simultanés ;
- en ce que lesdits volets hypersustentateurs (4G,4D) sont liés par une liaison mécanique de torsion (15) permettant une dissymétrie de position desdits volets hypersustentateurs (4G,4D) en position déployée ; et
- en ce que des moyens (25,61) sont prévus pour bloquer lesdits volets hypersustentateurs (4G,4D) en position, dès que la dissymétrie de position desdits volets hypersustentateurs en position déployée atteint un seuil prédéterminé.

2 - Système selon la revendication 1, caractérisé en ce que lesdits moyens de blocage comportent un interrupteur commandé par la torsion de ladite liaison mécanique (15) et commandant ledit dispositif de commande (31) dudit bloc de distribution de fluide hydraulique.

3 - Système selon la revendication 1, caractérisé en ce que lesdits moyens de blocage comportent des capteurs (58,59) de position desdits volets hypersustentateurs, un comparateur à seuil (60) et un interrupteur (61) commandé par ledit comparateur à seuil (60) et commandant ledit dispositif de commande (31) dudit bloc de distribution de fluide hydraulique.

4 - Système selon la revendication 1, caractérisé en ce que ladite liaison mécanique (15) comporte un arbre de torsion (16) qui tourillonne autour de son axe par rapport à la structure desdites ailes et dont les extrémités sont respectivement reliées auxdits volets par l'intermédiaire de manetons (17) et de bielles (19).

5 - Système selon la revendication 4, caractérisé en ce que ledit arbre de torsion (16) est relié audit dispositif de commande (31) du bloc de distribution de fluide hydraulique, afin de transmettre audit dispositif de commande des informations sur sa rotation autour de son axe, c'est-à-dire sur l'amplitude de la position déployée desdits volets.

6 - Système selon les revendications 2 et 4, caractérisé en ce que la liaison mécanique (15) comporte de plus une tige (20) coaxiale audit arbre de torsion (16) et solidaire en rotation, à l'une de ses extrémités, d'une extrémité dudit arbre de torsion, un système de butée et de contact (26,27) étant disposé entre l'extrémité libre de ladite tige (20) et la partie en regard dudit arbre de torsion.

7 - Système selon la revendication 1, pour un avion dans lequel, sur chaque aile, est prévu un volet hypersustentateur supplémentaire extérieur (5G et 5D), les deux volets d'une aile (4G et 5G, d'une part, et 4D et 5D, d'autre part) étant liés l'un à l'autre par un couplage mécanique (14), caractérisé :
- en ce que lesdits volets supplémentaires extérieurs (5G,5D) sont respectivement actionnés par des vérins hydrauliques réversibles supplémentaires (11.5G, 11.5D), agencés de façon :
. que les chambres (37) de ces vérins supplémentaires (11.5G,11.5D) correspondant, lorsqu'elles sont alimentées en fluide, à la rétraction desdits volets extérieurs supplémentaires soient reliées en commun aux chambres correspondantes des vérins (11.4G,11.4D) associés aux volets intérieurs (4G,4D) et au premier orifice correspondant (47) dudit bloc de distribution de fluide hydraulique (32) ;
. et que les chambres (36) desdits vérins supplémentaires (11.5G,11.5D) correspondant, lorsqu'elles sont alimentées en fluide, au déploiement desdits volets extérieurs supplémentaires soient reliées entre elles et, par l'intermédiaire d'un premier restricteur (41), au second orifice (38) dudit bloc de distribution hydraulique (32), auquel sont reliées les chambres (36) correspondantes des vérins (11.4G,11.4D) actionnant les volets intérieurs (4G,4D) ;
- et en ce qu'un second restricteur (42) est prévu entre ledit second orifice (38) dudit bloc de distribution hydraulique (32) et les chambres correspondantes (36) des vérins associés aux volets intérieurs.

8 - Système selon les revendications 5 et 7, caractérisé en ce qu'il comporte un dispositif d'alarme (56,57) déclenché par ledit dispositif de commande (31), lorsque ledit organe de commande volontaire (30) est dans une position correspondant au déploiement desdits volets hypersustentateurs, alors que la rotation dudit arbre de torsion (16) indique la rétraction de ces derniers.

## Patentansprüche

1. System zur Steuerung der Flügelklappen (4G, 4D) eines Flugzeuges mit zwei festen Tragflügeln, die zueinander und zur Längsmittelebene des Flugzeugs symmetrisch und mit je mindestens einem Antriebsmotor und einer Hochauftriebsklappe versehen sind, wobei jede dieser Klappen (4G, 4D) dem Nachstrom wenigstens eines Motors unterworfen ist und wobei das Steuersystem umfaßt:
   - eine Druckquelle (33) für ein hydraulisches Strömungsmittel;
   - einen an die Druckquelle angeschlossenen Verteilerblock (32) für hydraulisches Strömungsmittel;
   - von dem Verteilerblock (32) für hydraulisches Strömungsmittel gesteuerte Betätigungsmittel (11.4G, 11.4D) für die Flügelklappen (4G, 4D);
   - eine Steuereinrichtung (31) für den Verteilerblock für hydraulisches Strömungsmittel; und
   - ein zur Verfügung eines Piloten oder Kommandanten stehendes Organ (30) zur unabhängigen Steuerung der Flügelklappen zwischen einer eingefahrenen Neutralstellung und zumindest einer ausgefahrenen Hochauftriebsstellung oder umgekehrt, und zwar mittels der Steuereinrichtung (31), des Verteilerblocks (32) für hydraulisches Strömungsmittel und der Betätigungsmittel (11.4G, 11.4D), dadurch gekennzeichnet:
   - daß die Betätigungsmittel doppeltwirkende Hydraulikzylinder (11.4G und 11.4D) sind, die derart angeordnet sind, daß jede Klappe mittels eines Zylinders betätigt wird und daß jede der beiden Kammern (36, 37) eines Zylinders mit der entsprechenden Kammer des anderen Zylinders und mit einem Anschluß (38 oder 47) des Verteilerblocks (32) für hydraulisches Strömungsmittel verbunden ist, und zwar derart, daß die entsprechenden Kammern der Zylinder jeweils gleichzeitig mit Druck beaufschlagt und drucklos sind;
   - daß die Flügelklappen (3G, 4D) miteinander mittels einer torsionsfähigen mechanischen Verbindung (15) verbunden sind, die eine Asymmetrie der Stellungen der Klappen (4G, 4D) in ausgefahrener Stellung erlaubt; und
   - daß Mittel (25, 61) vorgesehen sind, um die Flügelklappen (4G, 4D) in ihrer Stellung zu blockieren, sobald die Asymmetrie der Stellungen der ausgefahrenen Klappen eine vorbestimmte Schwelle erreicht.

2. System nach Anspruch 1, dadurch gekennzeichnet, daß die Blockiermittel einen Schalter umfassen, der durch die Torsion der mechanischen Verbindung (15) gesteuert wird und die Steuereinrichtung (31) des Verteilerblocks für hydraulisches Strömungsmittel steuert.

3. System nach Anspruch 1, dadurch gekennzeichnet, daß die Blockiermittel Stellungsgeber (58, 59) für die Flügelklappen, einen Grenzwertvergleicher (60) und einen Schalter (61) aufweisen, der von dem Grenzwertvergleicher (60) gesteuert wird und die Steuereinrichtung (31) des Verteilerblocks für hydraulisches Strömungsmittel steuert.

4. System nach Anspruch 1, dadurch gekennzeichnet, daß die mechanische Verbindung (15) eine Torsionswelle (16) aufweist, die sich bezüglich der Struktur der Tragflügel um ihre Achse dreht und deren Enden jeweils über Kurbelarme (17) und Schubstangen (19) mit den Klappen verbunden sind.

5. System nach Anspruch 4, dadurch gekennzeichnet, daß die Torsionswelle (16) mit der Steuereinrichtung (31) des Verteilerblocks für hydraulisches Strömungsmittel verbunden ist, um Informationen über ihre Drehung um ihre Achse, d.h. über die Amplitude der ausgefahrenen Stellung der Klappen, auf diese Steuereinrichtung zu übertragen.

6. System nach den Ansprüchen 2 und 4, dadurch gekennzeichnet, daß die mechanische Verbindung (15) außerdem eine zu der Torsionswelle (16) koaxiale Stange (20) aufweist, die an einem Ende drehfest mit einem Ende der Torsionswelle verbunden ist, wobei ein Anschlag- und Kontaktsystem (26, 27) zwischen dem freien Ende der Stange (20) und der entsprechenden Partie der Torsionswelle angeordnet ist.

7. System nach Anspruch 1 für ein Flugzeug, bei dem an jedem Tragflügel eine zusätzliche äußere Hochauftriebsklappe (5G und 5D) vorgesehen ist, wobei die zwei Klappen eines Flügels (4G und 5G einerseits und 4D und 5D andererseits) miteinander durch eine mechanische Kupplung (14) verbunden sind, dadurch gekennzeichnet:
   - daß die zusätzlichen äußeren Klappen (5G, 5D) jeweils durch zusätzliche doppeltwirkende hydraulische Zylinder (11.5G, 11.5D) derart betätigt sind:
   - daß die Kammern (37) dieser zusätzlichen Zylinder (11.5G, 11.5D)r welche, wenn sie mit Strömungsmittel beaufschlagt sind, dem Einfahren der zusätzlichen äußeren Klappen entsprechen, gemeinsam mit den entsprechenden Kammern der Zylinder (11.4G, 11.4D), die den inneren Klappen (4G, 4D) zugehören, und dem ersten Anschluß (47) des Verteilerblocks (32) für hydraulisches Strömungsmittel angeschlossen sind;
   - und daß die Kammern (36) dieser zusätzlichen Zylinder (11.5G, 11.5D), welche, wenn sie mit Strömungsmittel beaufschlagt sind, dem Ausfahren der zusätzlichen äußeren Klappen entsprechen, untereinander und unter Zwischenschaltung einer ersten Strömungsdrossel (41) mit dem zweiten Anschluß (38) des Verteilerblocks (32) für hydraulisches Strömungsmittel verbunden sind, an den die entsprechenden Kammern (36) der die inneren Klappen (4G, 4D) betätigenden Zylinder (11.4G, 11.4D) angeschlossen sind;
   - und daß eine zweite Strömungsdrossel (42) zwischen dem zweiten Anschluß (38) des Verteilerblocks (32) für hydraulisches Strömungsmittel und den entsprechenden Kammern (36) der den inneren Klappen zugeordneten Zylinder vorgesehen ist.

8. System nach den Ansprüchen 5 und 7, dadurch gekennzeichnet, daß es eine Alarmeinrichtung (56, 57) aufweist, die durch die Steuereinrichtung (31) ausgelöst wird, wenn das Organ (30) zur unabhängigen Steuerung in einer Stellung ist, welche dem Ausfahren der Flügelklappen entspricht, während die Drehung der Torsionswelle (16) das Einfahren derselben anzeigt.

**Claims**

1. System for controlling the high-lift flaps (4G, 4D) of an aircraft comprising two fixed wings, symmetrical to each other with respect to the median longitudinal plane of said aircraft and each provided with at least one engine for propulsion and a high-lift flap, each of said flaps (4G, 4D) being subjected to the blast of at least one engine, said control system comprising:
   − a source (33) of hydraulic fluid under pressure;
   − a unit (32) for distributing hydraulic fluid connected to said source;
   − means (11.4G, 11.4D) for actuating said high-lift flaps (4G, 4D) controlled by said hydraulic fluid distributing unit (32);
   − a device (31) for controlling said hydraulic fluid distribution unit; and
   − a voluntary control member (30), at a pilot's disposal and controlling, via said control device (31), said hydraulic fluid distributing unit (32) and said actuating means (11.4G, 11.4D), said high-lift flaps between a retracted neutral position and at least one extended lift-augmenting position, and vice-versa, characterized in that:
   − said actuating means are reversible hydraulic jacks (11.4G and 11.4D), arranged so that each flap is actuated by a jack and each of the two chambers (36, 37) of one jack is connected to the corresponding chamber of the other jack, as well as to an orifice (38 or 47) in said hydraulic fluid distributing unit (32), so that the supply and exhaust of the corresponding chambers of said jacks are respectively simultaneous;
   − said high-lift flaps (4G, 4D) are connected by a mechanical torsional link (15) allowing a dissymmetry of position of said high-lift flaps (4G, 4D) in extended position; and
   − means (25, 61) are provided for blocking said high-lift flaps (4G, 4D) in position, as soon as the dissymmetry of position of said high-lift flaps in extended position attains a predetermined threshold.

2. System according to claim 1, characterized in that said blocking means comprise a switch controlled by the torsion of said mechanical link (15) and controlling said device (31) for controlling said hydraulic fluid distributing unit.

3. System according to claim 1, characterized in that said blocking means comprise sensors (58, 59) detecting the position of said high-lift flaps, a threshold comparator (60) and a switch (61) controlled by said threshold comparator (60) and controlling said device (31) for controlling said hydraulic fluid distributing unit.

4. System according to claim 1, caracterized in that said mechanical link (15) comprises a torque shaft (16) which swivels about its axis with respect to the structure of said wings and of which the ends are respectively connected to said flaps via crankpins (17) and connecting rods (19).

5. System according to claim 4, characterized in that said torque shaft (16) is connected to said device (31) for controlling said hydraulic fluid distributing unit, in order to transmit to said control device information as to the rotation thereof about its axis, i.e. information on the amplitude of the extended position of said flaps.

6. System according to claims 2 and 4, characterized in that the mechanical link (15) comprises, in addition, a rod (20) coaxial to said torque shaft (16) and fast in rotation, at one of its ends, with an end of said torque shaft, a system (26, 27) of stop and of contact being disposed between the free end of said rod (30) and the opposite part of said torque shaft.

7. System according to claim 1, for an aircraft in which an additional outer high-lift flap (5G and 5D) is provided on each wing, the two flaps of one wing (4G and 5G, on the one hand, and 4D and 5D, on the other hand) being connected to each other by a mechanical coupling (14), characterized in that:
   − said additional outer flaps (5G, 5D) axe respectively actuated by additional reversible hydraulic jacks (11.5G, 11.5D) arranged so that:
   − the chambers (37) of these additional jacks (11.5G, 11.5D) corresponding, when they are supplied with fluid, to the retraction of said additional outer flaps, are connected in common to the corresponding chambers of the jacks (11.4G, 11.4D) associated with the inner flaps (4G, 4D) and to the first corresponding orifice (47) of said hydraulic fluid distributing unit (32);
   − and the chambers (36) of said additional jacks (11.5G, 11.5D) corresponding, when they are supplied with fluid, to the extension of said additional outer flaps, are connected together and, via a first restrictor (41), to the second orifice (38) of said hydraulic distributing unit (32), to which are connected the corresponding chambers (36) of the jacks (11.4G, 11.4D) actuating the inner flaps (4G, 4D);
   − and a second restrictor (42) is provided between said second orifice (38) of said hydraulic distributing unit (32) and the corresponding chambers (36) of the jacks associated with inner flaps.

8. System according to claims 5 and 7, characterized in that it comprises an alarm device (56, 57) triggered off by said control device (31), when said voluntary control member (30) is in a position corresponding to the extension of said high-lift flaps, whilst rotation of said torque shaft (16) indicates retraction of the latter.

## Fig.1

*Fig: 2*

EP 0 270 414 B1

*Fig.3*

*Fig.4*

9.4G

16

9.4D    22    26    V    23

27

L                                                                           L

21                                                                          24

9.4G    20    28    29                              9.4D    25    V

15

17.G                                               17.D

7.4G                                                     7.4D

EP 0 270 414 B1

*Fig.5*

A

A

23

27

26                                          24

27

*Fig. 6*